(19) **Europäisches Patentamt**

**European Patent Office**

**Office européen des brevets**

(11) **EP 1 120 675 B1**

(12) **EUROPEAN PATENT SPECIFICATION**

(45) Date of publication and mention
of the grant of the patent:
**05.01.2005  Bulletin 2005/01**

(51) Int Cl.7: **G02B 21/16**, G02B 21/00,
G06F 19/00, G01N 21/64

(21) Application number: **00124682.6**

(22) Date of filing: **11.11.2000**

(54) **Apparatus and method for analyzing acquired scan data**

Gerät und Verfahren zum Analysieren von erfassten Abtast-Daten

Dispositif et méthode d'analyse des données de balayage acquises

(84) Designated Contracting States:
**DE FR GB**

(30) Priority: **10.12.1999  US 170243 P**

(43) Date of publication of application:
**01.08.2001  Bulletin 2001/31**

(73) Proprietor: **Leica Microsystems Heidelberg GmbH**
**68165 Mannheim (DE)**

(72) Inventor: **Olschewski, Frank**
**69118 Heidelberg (DE)**

(74) Representative: **Reichert, Werner F., Dr.**
**Leica Microsystems AG,**
**Konzernstelle Patente + Marken,**
**Postfach 20 20**
**35530 Wetzlar (DE)**

(56) References cited:
**US-A- 5 283 433**

• **OLSCHEWSKI, FRANK: "Phasenvisualisierung als Alternative zu ratiometrischen Verfahren zur Bestimmung intrazellulärer Analyte-Konzentrationen in der Fluoreszenzmikroskopie" MITTEILUNGEN FÜR WISSENSCHAFT UND TECHNIK: SONDERAUSGABE "KONFOKALMIKROSKOPIE", vol. CDR, no. 4, October 2000 (2000-10), pages 48-72, XP002217374 Leica Microsystems Heidelberg**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The invention relates to a method and apparatus for analyzing acquired scan data, and a scanning fluorescence microscope having a method for analyzing acquired scan data. The invention refers in particular to a method for acquiring and processing signals of a process that are not directly observable because of the multiplicative superimposition of a global interference signal.

Many processes cannot be observed directly. This is true in particular of processes on which a global interference signal is multiplicatively superimposed. The procedure according to the existing art is to acquire-whenever physically possible- two signals $I_1(t)$ and $I_2(t)$ (represented here as time signals). $S(t)$ is the interference signal, $F(I(t))$ is the detector signal having a first wavelength, and $G(I(t))$ is the detector signal that derives from a second wavelength.

$$I_1(t) = S(t)F(I(t))$$

$$I_2(t) = S(t)G(I(t))$$

calculating a ratio r

$$r = \frac{I_1}{I_2} = \frac{F(I)}{G(I)} = H(I)$$

provides more characteristic information than in other cases about the I which cannot be observed without errors. Noise terms (noise, offsets) are ignored in this case in the two acquired signals $I_1(t)$ and $I_2(t)$, and this results in an additional additive noise term for r, which is ignored here. This type of procedure is existing art, e.g. is utilized in European Patent EP-B-0 592 089, and will be referred to hereinafter as "ratiometric measurement."

In microscopy (cf. C. R. Bright et al., Methods in Cell Biology; Vol. 30, pages 157 to 192, Academic Press Inc.) and cytofluorometry, two identically interfered signals, from which a conclusion as to the desired signal must be drawn, are acquired. When physiological processes are being observed, the physiological and photo toxic processes are superimposed. Similar situations occur in optical measurements with illumination in which the noise of the light source falsifies the object measurement, or in multi spectral image processing, where individual features can be emphasized by reducing multiplicative influences (cf. Jain (1989): "Fundamentals of Digital Image Processing," London, Prentice-Hall).

Optical measurement methods based on fluorescence are widely used for biological measurements (for example: fluorescence microscopy, fluorescence spectroscopy or cytometrie). According to the progress in biology and bio technology it is possible to stain specifically the various components of a biological cell. This provides an insight to physiological processes of cells or cell clusters. Measurements using specific fluorescent dyes enable the determination of analyte concentrations (for example $Na^+$, $K^+$, $Ca^{2+}$, $Mg^{2+}$, $pH(H^+)$ and others) by measuring the fluorescent properties of the dyes bonded to the analytes. These properties and fluorescence microscopy provide the possibility to image physiological processes of living cells. The information forms a basis for the understanding of the ion transport within a living cell or the reaction of pharmaceuticals or external stimulus on the living cell.

Common methods calculate or determine the measurement result from the change in fluorescent intensity due to the impact of the analyte. This measurement method is not reliable for fluorescent microscopy, because the concentration of the fluorescent dye within a cell cannot be controlled. The local fluorescent dye concentration changes continuously and can not be observed due to diffusion and bleaching effects. This causes systematic errors of the measurement result and is the reason for the reluctant use of this method. For special applications, without an alternative, excellent results are obtained.

Most of the applications ratiometric dyes are used and a ratio is calculated from the measured intensities of the different spectral bands or areas. The dyes perform different absorption and emission spectra's due to the binding of the analyte. The concentration (as mentioned above) is calculated from the ration of the two intensities detected (see Lakowicz, J.R.: PRINCIPLES OF FLUORESCENCE SPECTROSCOPY 2 nd Ed. New York: Kluwer Academic/ Plenum Publisher, 1999). This principle is widely used in fluorescent microscopy and mentioned in several printed publication as state of the art (see for example Tsien R.Y., Waggoner A.: "Fluorophores for Confocal Microscopy" In: Pawlwy J.B.: HANDBOOK OF BIOLOGICAL CONFOCAL MICROSCOPY. 2nd Edition New York: Plenum Press, 1995); Tsien R.Y.: Fluorescent Indicators of Ion Concentration. In: Taylor, D. L., Wang, Y-I.: Fluorescence Microscopy of Living Cells in Culture Part B". METHODS IN CELL BIOLOGY, Vol. 30., 157-192. San Diego: Academic Press, 1998).

Therefore, it is an object of the present invention to provide an apparatus for analyzing and visualizing acquired physiological scan data and thereby improving the measurement results and the optimizing the visualization of the scan data and in addition to that allow a reduction in production costs.

This object is solved by an apparatus for analyzing and visualizing acquired physiological scan data, the apparatus comprises: a display; a first subsystem wherein the first subsystem comprises at least two detectors each responsive to a different wavelength; a second subsystem comprising a processing unit receiving the signals accumulated by the at least two detectors and calculating polar coordinates for the signals acquired by the first and second detectors; a unit for quantizing the angle component of the polar coordinates and adjusting the information capacity to the available display; and a visualization unit for assigning color to the values measured.

It is another object of the present invention to provide a method for analyzing and visualizing acquired physiological scan data. The method improves the measurement result and optimizes the visualization of the scan data.

This object is solved by a method which comprises the steps of:

- accumulating scan data for at least two different wavelengths each wavelength is accumulated with a different detector,
- transferring the accumulated data to a processing unit for calculating polar coordinates of the accumulated scan data
- quantizing the angle component of the polar coordinates and sending the data to a visualization unit,
- assigning color to angle components of the scan data for generating colored angle components, and
- displaying the colored angle components on a display.

It is a further object of the present invention to provide a scanning fluorescence microscope. The scanning fluorescence microscope analyzes and visualizes the acquired physiological scan data and thereby improves the measurement results and optimizes the visualization of the scan data and in addition to that allow a reduction in production costs.

The object is accomplished by a scanning fluorescence microscope with means for analyzing and visualizing acquired physiological scan data, comprising:

a display;
a first subsystem wherein the first subsystem comprises at least two detectors each responsive to a different wavelength;
a second subsystem comprising a processing unit receiving the signals accumulated by the at least two detectors and calculating polar coordinates for the signals acquired by the first and second detectors;
a unit for quantizing the angle component of the polar coordinates and adjusting the information capacity to the available display; and
a visualization unit for assigning color to the values measured.

It is yet another object of the present invention to provide a method for analyzing acquired scan data wherein the scan data are acquired with a scanning fluorescence microscope. The measurement results and the visualization of the measurement results should be optimized.

This object is accomplished by a method for analyzing and visualizing acquired physiological scan data comprising the steps of:

- providing a scanning fluorescence microscope having at least two detectors each of which acquire light which differs in wavelength,
- scanning a fine light beam generated by an illumination means for across a sample of interest,
- accumulating scan data for at least two different wavelengths each wavelength is accumulated with a different detector,
- transferring the accumulated data to a processing unit for calculating polar coordinates of the accumulated scan data
- quantizing the angle component of the polar coordinates and sending the data to a visualization unit,
- assigning color to angle components of the scan data for generating colored angle components, and
- displaying the colored angle components on a display.

In the preferred embodiment of the invention an apparatus for analyzing and visualizing acquired physiological scan data is disclosed. The configuration according to the present invention provides the advantage that in the context of the transformation, a separation is performed between the usable signal and the interference signal. This considerably simplifies the configuration of the apparatus, resulting in lower manufacturing costs. What is significant in this context is that after the transformation, only scalar variables are processed. The transformation maps the original two-dimensional signal space onto a compact region in a one-dimensional signal space, thereby achieving particular compactness. Because of this property, the usable signal can be coded and memory space is efficiently used.

Even if the above-described functionality is confined to the ratiometric information, the system according to the present invention performs much better than purely ratiometric approaches. The polar coordinate transformation maps the relevant measured data onto the angle in compact fashion, taking into account the degrees of freedom of the process. Methods based on divisions do not offer this compact transformation or the compression property (linear, in the transformation space) associated therewith.

It should also be noted that the transformation into polar coordinates technically does not necessarily require a division (neural networks, COORDIC algorithms, lookup tables), and represents much more of the underlying mathematical operation than is disclosed in EP-B-0 592 089.

The present invention also encompasses a method which, in one embodiment, is used in connection with a scanning fluorescence microscope.

The nature and mode of operation of the present invention will now be more fully described in the following detailed description of various embodiments taken with the accompanying drawing figures, in which:

FIG. 1          shows a schematic view of the apparatus according to the present invention in conjunction with a
                fluorescence microscope;
FIG. 2          shows a schematic depiction of the apparatus for carrying out the method according to the present
                invention;
FIG. 3          shows the structure of the $I_1$-$I_2$ space and the delimitation of the working area using physiological
                models and the property of fluorescent dyes;
FIG. 4          shows a schematic configuration for segmentation into physiological and non-physiological signal
                components;
FIG. 5          shows a schematic depiction of the invention illustrating the various sub processes together,
FIG. 6          shows a schematic depiction of the entire system according to the present invention;
FIG. 7          shows one possible visualization of the segmentation;
FIG. 8          shows an exemplary embodiment for adjusting the segmentation polygon on the display; and
FIGS. 9a to 9h   show a graphic depiction of the calibration procedure for determining the polygon.

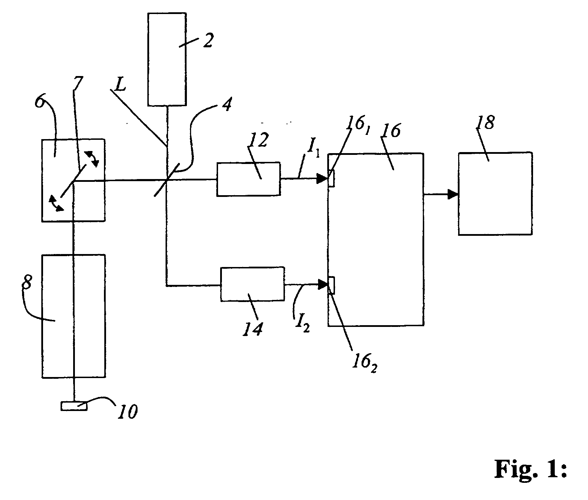

FIG. 1 shows a schematic illustration of a system having a confocal microscope. It is clear that the present invention also applies to conventional fluorescence microscopes or any other application which detects, with two detectors, signals that differ in wavelength. The description in conjunction with a confocal microscope is not regarded as a limitation. The microscope comprises an illumination system 2 that generates a light beam L. Incident light beam L is directed by an optical device 4 to a scanning device 6. Scanning device 6 comprises a scanning mirror system 7 which is moveable such that light beam L is scanned across a specimen 10. Before light beam L reaches specimen 10, the light passes through an optical system 8. The light reflected from the specimen and the fluorescent light each travel along beam path L back to optical device 4. Positioned after optical device 4 are a first and a second detector 12 and 14, each of which receives light of different wavelengths. Detectors 12 and 14 convert the received light into a first and second electrical signal $I_1$ and $I_2$ respectively, which is proportional to the power of the light received from the specimen. First electrical signal $I_1$ is fed to a first input port $16_1$. Second electrical signal $I_2$ is fed to a second input port $16_1$. First input port $16_1$ and second input port $16_2$ are part of a control and processing unit 16. Finally, the output from control and processing unit 16 is sent to a display unit 18 which provides, besides other data in visual form, visual user guidance. Control and processing unit 16 is realized with a plurality of FPGA (field programmable gate array) units. To achieve online processing of scan signals, it is advantageous to digitize the analog signals I and P as soon as possible and to process the data with a programmable digital logic system. The advantage of FPGA electronics is absolute real-time processing, which allows nanosecond accuracy. It is possible as well to realize the processing of the scan signals with an conventional computer and specific software modules which perform like the FPGAs.

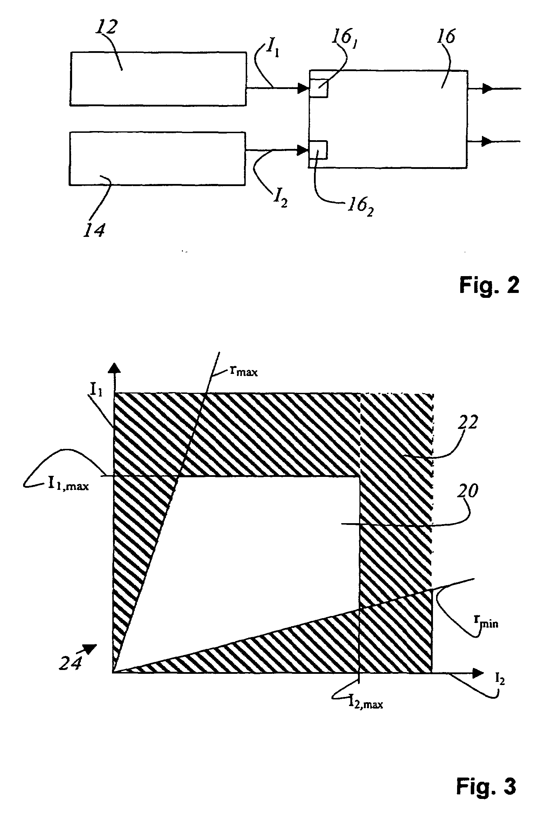

FIG. 2 depicts, in enlarged fashion, the two detectors 12 and 14 together with the processing electronics. This represents acquisition and coding on the basis of a multivariate detector model. The first and second detectors 12 and 14 respectively receive first and second signals $I_1$, and $I_2$. First and second signals $I_1$, and $I_2$ arrive via corresponding electrical connections in a control and processing unit 16, which is configured as a polar coordinate quantizer. Each two of the values received by the various detectors 12 and 14 can be combined into a vector. First signal $I_1$ is conveyed to a first input port $16_1$ and second signal $I_2$ is conveyed to a second input port $16_2$. Vector $\bar{I}$ is shown in Equation 1.

$$\bar{I} = \begin{pmatrix} I_1 \\ I_2 \end{pmatrix} \qquad \text{(Equation 1)}$$

Equation 2 shows the ratio *r* as a function of a vector $\bar{\omega}$ that results from dividing first signal $I_1$ by second signal $I_2$.

$$r(\bar{I}) = \frac{I_1}{I_2}$$

(Equation 2)

It is apparent that all the $r(\bar{I})=const$ in the $I_1$-$I_2$ diagram (see FIG. 3) define a straight line $g(r):s_1 = s_2r$. Each process that brings about a change in the ratio r must be associated with a change $\Delta I$ in the first and second signals equivalent to

$$\Delta\bar{I} = \begin{pmatrix} \Delta I_1 \\ \Delta I_2 \end{pmatrix}$$

(Equation 3)

in which $\Delta I_1$, and $\Delta I_2$ represent the changes in the first and second signals $I_1$, $I_2$ respectively. This change $\Delta I$ can be separated into two directions: in a direction parallel to g, no change in the ratio can occur; in a direction perpendicular to the straight line g (corresponding to $\nabla r$), a maximal change in the ratio occurs. Since this applies equally to all points, it is an obvious step to expand into polar coordinates as shown in Equation 4, in which R indicates the radius and $\varphi$ the angle for representing the first and second signals $I_1$, and $I_2$ in polar coordinates:

$$\begin{pmatrix} R \\ \varphi \end{pmatrix} = \begin{pmatrix} \sqrt{I_1^2 + I_2^2} \\ \arctan(I_1/I_2) \end{pmatrix} = \begin{pmatrix} R \\ \arctan(r) \end{pmatrix}$$

(Equation 4)

As is evident from Equation 4, only angle $\varphi$ contains the relevant information. In a scanning microscope (e. g. in a confocal microscope), the signals $I_1$ and $I_2$ deriving from first and second detectors 12 and 14 are necessarily discrete. In the simple case in which both variables are quantized in identical fashion in Q steps, the result is $Q^2$ distinguishable steps for the ratio signal. If identical probabilities are assigned to these steps, the number of bits shown in Equation 5 is needed in order to code the ratio.

$$B_{ratio} = ld(Q^2) \text{ bits} = 2ld(Q) \text{ bits}$$

(Equation 5)

This corresponds to a doubling of the memory space as compared to the two acquired variables (first and second signals $I_1$ and $I_2$). Coding of the angle $\varphi$ is determined by the number of vectors $\bar{I}$ that can be resolved on a circle of radius R for an angle $\varphi$ from 0° to 90°. Assuming that R: $0 < R \leq \sqrt{2}Q$ is constant, an upper limit of states can be indicated on the discrete space for each radius. This upper limit is defined by the length of the circular segment in Equation 6:

$$Q_R = \frac{\pi R}{2}$$

(Equation 6)

$Q_R$ is an upper bound for this value. This is an overestimate of states along oblique sections. This property is typical of discrete topologies. The maximum for this upper limit $Q_{R\,limit}$ is obtained, for $R = \sqrt{2}Q$, from Equation 7:

$$Q_{R,limit} = \frac{\pi\sqrt{2}q}{2}$$

(Equation 7)

Coding the states of this path (assuming an equal probability for all states) then requires a quantity $B_R$ of bit states (Equation 8):

$$B_R = ld(Q_{R,limit})\text{bits} = ld(\frac{\pi\sqrt{2}Q}{2}) \text{ bits} = [ld(\frac{\pi\sqrt{2}}{2}) + ld(Q)] \text{ bits} = [ldQ + 1.15]\text{bits}$$

(Equation 8)

This can be used directly for coding, and is approximately one bit more than for the acquired data; note that this form of coding is nonlinear.

Looking further at small signal changes around the working point $I$, the change in the ratio $r$ is then obtained from Equation 9:

$$\Delta r \approx \nabla r(\bar{I})\Delta\bar{I} = \frac{1}{I_2}\,\Delta I_1 - \frac{I_1}{(I_2)^2}\,\Delta I_2 \qquad \text{(Equation 9)}$$

The resolution of a small signal around the working point therefore depends on the position of the working point $I$: the working point $I$ has a controlling influence on the measurement. The resolution is higher for large detected values than for small values, the deciding factor being the particular radius on which the working point $I$ lies. For this reason, the coding indicated above (Equation 8) is rather conservative.

Practical example: Fluorescence microscopy

In fluorescence microscopy, the influence of the working point $I$ is unpredictable, and is superimposed on a trend over time toward lower values due to photo toxic effects (e.g. bleaching). The purpose of determining a ratio between the first and second signals $I_1$ is $I_2$ is precisely to eliminate these time-related influences, which cannot be done completely because of the influence of the working point $I$. In practice, every measurement extending over a period of time suffers from a loss of resolution over time. The resolution defined by the ratio is therefore only a theoretical value, and cannot be achieved in practice. An obvious choice here is to work with an expected (in the statistical sense) working point. If the input variables (first and second signals $I_1$ and $I_2$) are equally distributed, the result is the condition depicted in Equation 10:

$$E[\tilde{I}] = E[\begin{pmatrix} I_1 \\ I_2 \end{pmatrix}] = \frac{1}{2}\begin{pmatrix} Q \\ Q \end{pmatrix} = \begin{pmatrix} Q_{Expected} \\ Q_{Expected} \end{pmatrix} \qquad \text{(Equation 10)}$$

Coding the states (assuming an equal probability for all states) then requires a quantity $B_R$ of bit states (Equation 11):

$$B_R = ld(Q_{R.Expected})\ \text{bits} = ld(\frac{\pi\sqrt{2}\,Q_{Expected}}{2})\ \text{bits} = [ld(\frac{\pi\sqrt{2}}{4}) + ld(Q)]\text{bits} = [ldQ + = 0.15]\text{bits}$$

(Equation 11).

This can be coded with approximately the same memory depth as for the two original signals.

The method necessary for implementation uses substantially the system depicted in FIG. 2. First and second detectors 12 and 14 and control and processing unit 16 can easily be incorporated into the structure of existing units, for example into confocal or other scanning optical microscopes (cf. FIG. 1). Control and processing unit 16 is configured in the form of a polar coordinate quantizer. The polar coordinate quantizer can be implemented or configured in several ways.

One embodiment is to perform the requisite processing of the data using analog electronics. First and second detectors 12 and 14 supply first and second detector signals $I_1$ and $I_2$. Detector signals $I_1$ and $I_2$ are converted into the polar coordinates by way of an analog circuit, and then the polar coordinates are quantized. This method is laborious but, in principle, possible.

Another embodiment is to use digital circuits. Quantization of first and second signals $I_1$ and $I_2$ by first and second detectors 12 and 14, and processing, occur in the digital realm. Some possibilities for doing so include field programmable gate arrays (FPGA), personal computers (PC), or digital signal processors (DSP). This usually enables a more economical implementation. Additional possible configurations are 2D lookup tables; COORDIC algorithms (FPGA or PC); direct calculation using division, adders and multipliers, and lookup tables; and approximation via a digital neural network.

Signal separation (physiological and non-physiological)

The separation of physiological signals from non-physiological interference can also be applied here. The formulas presented in the documentation of C. R. Bright et al., Methods in Cell Biology, Vol. 30, pages 157 to 192, Academic Press Inc., for the calibration of physiological signals are all based on titration experiments. The in vitro calibration using $Ca^{2+}$ions is reproduced by Equation 12, the $pH$ value by Equation 13, and $cAMP$ by Equation 14:

$$[Ca^{2+}] = K\frac{r-r_{min}}{r_{max}-r}, \qquad \text{(Equation 12)}$$

$$[pH] \sim \log\frac{r-r_{min}}{r_{max}-r} \qquad \text{(Equation 13)}$$

$$[cAMP] = K(\frac{r-r_{min}}{r_{max}-r})^{1/n} \qquad \text{(Equation 14)}$$

in which $r_{min}$ is the measured ratio without calcium ions and $r_{max}$ the measured ratio with the maximum concentration of calcium ions. All the underlying processes are delimited by one $r_{min}$ and one $r_{max}$. When measuring $r_{min}$ and $r_{max}$ with fluorescent dyes, consideration must also be given to unbound and saturation states, meaning that in one case a maximum first signal $I_1$ is received and in the other case a maximum second signal $I_2$. These values must necessarily be measured with the same detectors, and are absolute operating limits. In $I_1$-$I_2$ diagram 24 (cf. FIG. 3), this information can be used to define a working region (in this case ignoring any background fluorescence, which essentially causes a displacement of the origin), within which a physiological signal must remain. White region 20 marked in $I_1$-$I_2$ diagram 24 is referred to as the "permitted region." Region 22 marked with crosshatching is of no physiological origin, and is not utilized for measurement. Any measurement point that is received in the hatched region is unequivocally a measurement error. This can be used to validate the measurement results. One possibility is to assign a specific color to not useable measurement results (for example by coloring points in the image red). In addition, this delimitation could also be used to reduce memory even further (although this is not discussed further here). The oblique operating boundaries can advantageously be verified in the transformation space that is described (boundary angles), and saturation intensities can be verified in the non-transformed space. Here again, an implementation in analog electronics, digital electronics, or software are possible. The segmented signal can be visualized directly; in an image, for example, all physiological components can be coded green, and all invalid components red.

Calibration and validation of physiological phenomena:

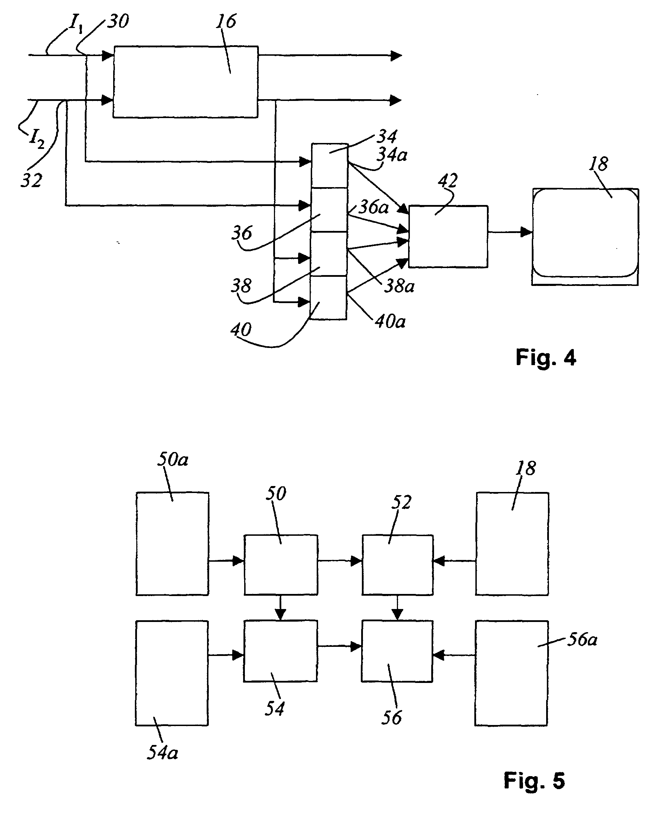

White region 20 depicted in FIG. 3 is the aforementioned working region, which is of high quality when it possesses the greatest possible opening angle and the largest possible surface area in $I_1$-$I_2$ diagram 24. This quality criterion can easily be verified, and is particularly favorable for use in an automated system adjustment method. One example is definition of the external comer points while at the same time displaying the $I_1$-$I_2$ plane in a derived form. FIG. 4 shows a configuration that is suitable for visualizing the aforementioned criteria. First and second signals $I_1$ and $I_2$ are delivered to control and processing unit 16. Also provided upstream from control and processing unit 16 are a first and a second branch 30 and 32, which convey first and second signals $I_1$ and $I_2$ to first and second comparison elements 34 and 36, respectively. Angle coordinate $\varphi$ of the polar coordinate of the particular measurement point is similarly conveyed to a third comparison element 38, which defines the lower limits of angle coordinate $\varphi$. Angle coordinate $\varphi$ is additionally conveyed to a fourth comparison element 40, which defines the upper limits of angle coordinate $\varphi$. Each of the comparison elements possesses an output 34a, 36b, 38a, and 40a, through which the signals are sent to a validation unit 42. The corresponding signals are sent from validation unit 42 out to display 18, and presented to the user in visual form.

FIG. 5 shows a schematic depiction of the invention which illustrates the correlation among the individual sub processes. The data to be processed are sent to a first section 50. The data derive, for example, from a corresponding receiving unit 50a. As described above, the data possess a particular coding of the amplitudes of signal pairs. This is a transformation of the amplitude vectors followed by quantization (see description of FIG. 2). The result of the transformation is to separate the usable signal and interference signal. This simplifies the system design and results in lower manufacturing costs, since after the transformation usually only a scalar variable needs to be processed. The transformation maps the original two-dimensional signal space onto a compact region in a one-dimensional signal space (compactness). As a result of this property, the usable signal can be coded and memory can be used efficiently economized. The resolution of the transformed, coded signal pair corresponds exactly to the degrees of freedom of the generating process. Virtual but unachievable resolutions, which occur with other methods, are thus avoided.

The data, transformed in first section 50, are conveyed to a second section 52. Because of the coding described in first section 50, the acquired image data are directly accessible to visualization. The data can be depicted directly on display 18. An amplitude vector can distinguish 65,536 states with currently standard 8-bit wide A/D converters, and 16,777,216 states at 12 bits. Human perception, however, is limited to about 200 colors and 500 brightness levels (see Mallot, "Sehen und die Verarbeitung visueller Information" [Vision and the processing of visual information], pages 108-109, Braunschweig, Vieweg, 1998). The coding defined in first section 50 greatly decreases the number of sections, and reduces the visualization to the essential information. The technical and human components are adapted to one another. The coded visualization is optimal in the sense that very small changes are mapped onto color changes that are just perceptible (optimization in terms of perceptual theory). At small signal amplitudes, coloring using a conventional 8-bit lookup coloring table is possible. At large signal amplitudes, pseudocoloring (see Lehmann, "Bildverarbeitung für die Medizin" [Image processing for medicine], pages 356-358) can still be used. There is no need for parameterization of the system by the user for specific selection of the information to be displayed. The entire system is easier to handle with improved ergonomics.

In a third stage 54, the biophysical models of physiological processes are linked to the data of the multivariate detector model from first section 50. This allows plausibility to be verified based on the acquired signals. The signal pair is segmented into a physiological and a non-physiological component. The details are described above in the section entitled "Signal separation (physiological and non-physiological)." This approach can be used to reduce human error during an experimental run, and serves to validate experiments that have already been performed. The data necessary for validation are obtained in a validation module 54a that is connected to third section 54.

The data obtained and ascertained in the second and third sections 52 and 54 are conveyed to a fourth section 56. Calibration is then performed in fourth section 56 using a calibration module 56a. The physiological data obtained in third section 54 can be checked during execution, and concurrently visualized in second section 52. This approach eliminates operating uncertainties, and reduces human error during an experimental run. The user has a guide. A further effect is to improve ergonomics and working effectiveness. An automation unit acts on the fourth section 56. The method can be optimally incorporated into the system design by way of computer-aided help functions. This results in direct guidance of the user by software. The necessary settings can be automated relatively easily.

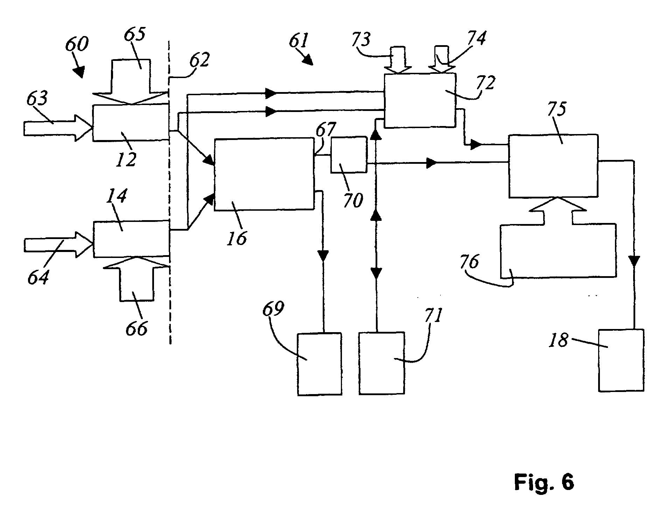

FIG. 6 shows a graphic depiction of the entire system. The system is subdivided into two subsystems, separated from one another by a dashed line 62. A first subsystem 60 comprises electronic and optical means (not depicted) used to obtain signals. A second subsystem 61 is implemented in the form of hardware or software. A combination of electronic components with software is possible, as well.

First subsystem 60 comprises first and second detectors 12 and 14 and their control systems (not explicitly depicted), such as gain and offset, which are necessarily implemented in the unit as hardware. Possibilities for this are, for example, a microscope, cell sorter, spectral camera, etc. First detector 12 receives the fluorescent light of wavelength $\lambda_1$, symbolized by an arrow 63, emitted from the specimen. Second detector 14 receives the fluorescent light of wavelength $\lambda_2$, symbolized by an arrow 64, emitted from the specimen. First and second detectors 12 and 14 also must be calibrated. The parameters are the gain and the zero point of detectors 12 and 14. An arrow 65 depicts the effect of the parameters gain g1 and zero point o1 on first detector 12. An arrow 66 depicts the effect of the parameters gain g2 and zero point o2 on second detector 14. The simplest form of calibration has an input mask (not depicted) on display 18 for the gain (g1, g2) and zero point (o1, o2). Adjustments can be made, for example, with a slider or a panel box (not depicted here).

The signals received by the detectors 12 and 14 are forwarded to control and processing unit 16, where the transformation described above is performed. A first output 67 of control and processing unit 16 supplies a signal for angle coordinate $\varphi$ of the polar coordinate. Angle coordinate $\varphi$ is conveyed to a quantizer 70. From there the quantized signals can be conveyed to a memory unit 71, from which they can also be retrieved at any time. A second output 68 of control and processing unit 16 supplies a signal for local coordinate R of the polar coordinate. Local coordinate R can be conveyed to a canceler 69 or a memory unit as well. In the case of conventional ratiometric applications, however, this is obvious, and simply allows attractive visualization. Second stage 61 also comprises a segmenter 72 into which flow the signals of first and second detectors 12 and 14, and also the signal from quantizer 70. The quantized signals can also be retrieved from memory unit 71. An arrow 73 indicates calibration parameters $r_{min}$ and $r_{max}$ which represent the influencing variables for segmenter 72. An arrow 74 indicates calibration parameters $l_{min}$ and $l_{max}$ that also represent influencing variables for segmenter 72. Segmenter 72 performs a validation. The corresponding signal is then conveyed to a visualization unit 75. Also acting on visualization unit 75 is a color adaptation unit 76, with which the user can adjust the image on display 18. Visualization unit 75 additionally contains the quantified signals of quantifier 70. The color information is adapted to the expected measured values. The algorithms implemented in visualization unit 75 are not specified further here. All algorithms profit from the improved signal dynamics that can be achieved with control and processing unit 16. For image data, accumulation or filters (for "attractiveness" purposes) could be integrated. For volumetric data (for example in confocal microscopy), there could be a volume renderer.

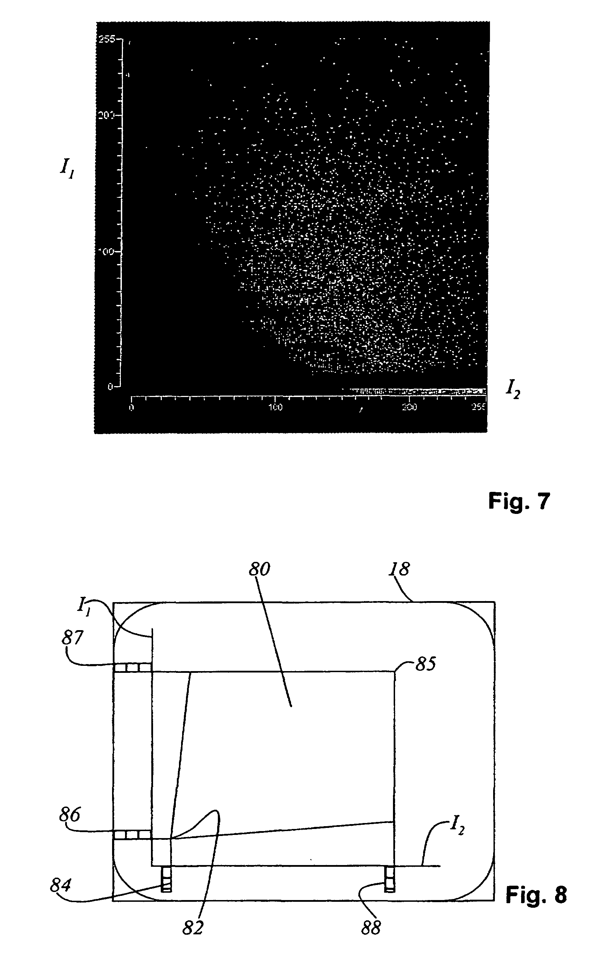

FIG. 7 shows one possible presentation of the data on display 18 after segmentation. The segmentation model of itself, however, can be visualized by way of a geometric analogy and presented to the user. This can be done with a presentation as in FIG. 7, similar to a cytofluorogram. First signal $I_1$ is plotted on the ordinate, and second signal. $I_2$ on the abscissa. The individual measurement points are depicted as a cloud between the coordinate axes. What is depicted is the $I_1$-$I_2$ space as in FIG. 3, together with frequency information indicating how often each particular combination of the first and second signals ($I_1$ und $I_2$) occurs in an image. This space can also be used to visualize the segmentation polygon.

FIG. 8 shows an exemplary embodiment for adjusting a segmentation polygon 80 on display 18. The simplest form of calibration has an input mask for $r_{min}$, $r_{max}$, $I_{min}$, $I_{max}$. The gain and zero point are set by way of the system (generally using a panel box or slider, which is depicted correspondingly on the screen). A corner 82 of segmentation polygon 80 located opposite the coordinate origin can be adjusted using a first slider 84 on the abscissa and a second slider 86 on the ordinate. A third slider 88 on the abscissa and a fourth slider 87 on the ordinate make it possible to adjust the upper limit $I_{1-max}$ of first signal $I_1$ and the upper limit $I_{2-max}$ of second signal $I_2$. All the values can be read off directly from a diagram of this kind. At the same time, it is possible in this fashion to determine the quality of the measurement, which depends on the surface area of polygon 80. In addition, as in the case of a cytofluorogram, the image information can also be presented as a point cloud and the outliers-those points lying outside polygon 80-are directly visible. This information can be used accordingly for calibration. This is done by displaying the image and the diagram (FIG. 8) side by side on display 18. The average intensities in this polygon 80 yield the sharp corner of the polygon close to the origin of the coordinate system. The cell of interest could also be delimited by a polygon 80 in the image. The averaged intensities inside this polygon correspond to a second point.

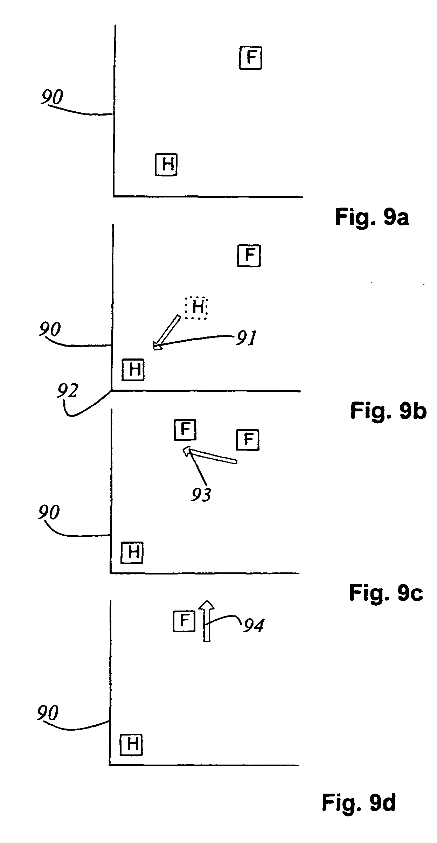

FIGS. 9a through 9h are a graphic depiction of the calibration procedure for determining the polygon. FIG. 9a shows the first step in calibration. In diagram 90, a background region H is defined. A region of interest F represents, for example, the cell being examined or the cell of interest. The polygon can then be constructed sequentially using these two regions (or points) H and F.

As shown in FIG. 9b, images are continuously received and the user adjusts the zero points of first and second detectors 12 and 14 until background region H is located in the vicinity of origin 92. Background region H (bounded by a dashed line in FIG. 9b) then migrates toward the origin as indicated by arrow 91. The ion of interest in the specimen is bound by chemical intervention. As FIG. 9c shows, region of interest F migrates as indicated by an arrow 93. Region of interest F achieves an increased intensity in diagram 90. The chemical intervention is done for example by pouring a solution of the ion of interest onto the sample.

In FIG. 9d, the gain of first detector 12 is adjusted so as to reach almost the end of the detector sensitivity/ resolution. Region of interest F moves in the direction of an arrow 94 away from the abscissa of diagram 90.

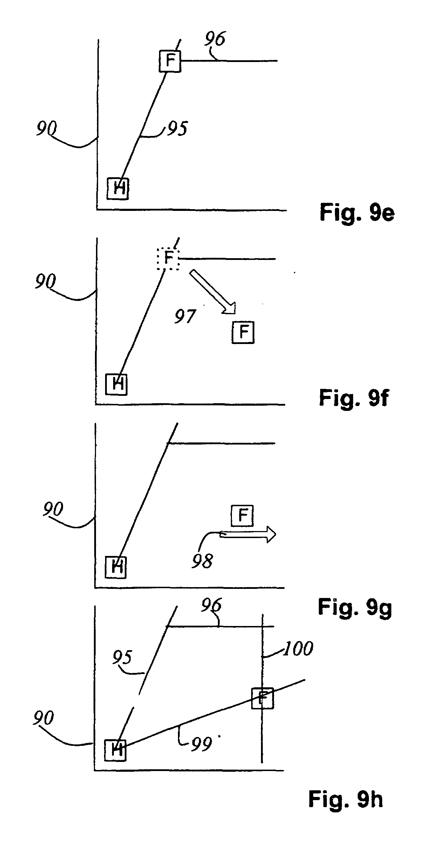

As is evident from FIG. 9e, from the positions of the background region H and region of interest F it is already possible to define a first and a second line 95 and 96 of the segmentation polygon. First line 95 connects the background region H and the region of interest F, and second line 96 passes through region of interest F and runs parallel to the abscissa of diagram 90.

In FIG. 9f the ion of interest is now released by intervention. The region of interest F migrates in the direction of an arrow 97 away from the intersection of first and second lines 95 and 96. The intersection is identified by a dotted box.

In FIG. 9g, the gain of second detector 14 is adjusted so as to reach almost the end of the detector sensitivity/ resolution. The region of interest F migrates in the direction of an arrow 98 parallel to the abscissa of diagram 90.

As is evident from FIG. 9h, the final position of region of interest F allows a third and fourth line 99 and 100 to be defined. Third line 99 connects the background region H and region of interest F. The fourth line passes through region of interest F and is parallel to the ordinate of diagram 90. This algorithm maximizes the surface area of the resulting polygon, can serve as an explanatory component, and encompasses almost all the calibration parameters. These can subsequently be saved and reused when necessary (similar cells, similar environment). The steps described in FIGS. 9b, 9d, 9e, 9g, and 9h can be performed automatically. Each step in itself is relatively simple. The steps described in FIGS. 9d and 9g can be performed either by directly modifying the gain on the panel box or also by dragging region of interest F on display 18.

Although specific embodiments have been illustrated and described herein, it will be appreciated by those skilled in the art that any arrangement which is calculated to achieve the same purpose may be substituted for the specific embodiment shown. This application is intended to cover any adaptations or variations of the present invention. Therefore, it is manifestly intended that this invention be limited only by the following claims.

Parts List:

| | | |
|---|---|---|
| 2 | Illumination system |
| 4 | Optical device |
| 6 | Scanning device |
| 7 | Scanning mirror system |
| 8 | Optical system |
| 10 | Specimen |
| 12 | First detector |
| 14 | Second detector |
| 16 | Control and processing unit |
| $16_1$ | First input port |
| $16_2$ | Second input port |
| 18 | Display unit |
| 20 | White region |
| 22 | Crosshatched region |
| 24 | $I_1$-$I_2$ diagram |
| 30 | First branch |
| 32 | Second branch |
| 34 | First comparison element |
| 34a | Output |
| 36 | Second comparison element |
| 36a | Output |
| 38 | Third comparison element |
| 38a | Output |
| 40 | Fourth comparison element |
| 40a | Output |
| 42 | Validation element |
| 50 | First section |
| 50a | Receiving unit |
| 52 | Second section |
| 54 | Third section |
| 54a | Validation module |
| 56 | Fourth section |
| 56a | Calibration module |
| 60 | First subsystem |
| 61 | Second subsystem |
| 62 | Dashed line |
| 63 | Arrow |
| 64 | Arrow |
| 65 | Arrow |
| 66 | Arrow |
| 67 | First output |
| 68 | Second output |
| 69 | Canceler |
| 70 | Quantizer |
| 71 | Memory unit |
| 72 | Segmenter |
| 73 | Arrow |
| 74 | Arrow |
| 75 | Visualization unit |
| 76 | Color adaptation unit |
| 80 | Polygon |
| 82 | Corner opposite the coordinate origin |
| 84 | First slider |
| 86 | Second slider |

| 87 | Fourth slider |
|---|---|
| 88 | Third slider |
| 90 | Diagram |
| 91 | Arrow |
| 92 | Origin |
| 93 | Arrow |
| 94 | Arrow |
| 95 | First line |
| 96 | Second line |
| 97 | Arrow |
| 98 | Arrow |
| 99 | Third line |
| 100 | Fourth line |
| $I_1$ | First signal |
| $I_2$ | Second signal |
| $I_{1-max}$ | Upper limit of first signal |
| $I_{2-max}$ | Upper limit of second signal |
| F | region of interest |
| H | background region |
| L | Light beam |
| $r_{min}$ | Calibration parameter |
| $r_{max}$ | Calibration parameter |

**Claims**

1. Apparatus for analyzing and visualizing acquired physiological scan data, comprising:

   a display (18);
   a first subsystem (60) wherein the first subsystem (60) comprises at least two detectors (12, 14) each responsive to a different wavelength;
   a second subsystem (61) comprising a processing unit (16) receiving the signals accumulated by the at least two detectors (12 and 14)

   **characterized in** by
   the second subsystem (61) combining the at least first and second signal ($I_1$, $I_2$) into a vector I, and transforming said vector into a polar coordinate system ;
   a unit for quantizing (70) an angle component of the polar coordinates available display (18); a segmenter (72) which has a plurality of input ports for receiving the detector signals and angle component, and inputs for calibration parameters consisting essentially of minimum angle, the maximum angle, maximum and minimum intensities from the detectors; and
   a visualization unit (75) for assigning color to the values processed.

2. Apparatus as defined in claim 1 wherein the second subsystem (61) comprises and a visualization unit (75) for assigning one color to proper measurement values and an other color to improper measurement values.

3. Apparatus as defined in claim 1 wherein a storage unit (71) is provided for storing the quantized angle component of the polar coordinates.

4. Apparatus as defined in claim 1 wherein the processing unit (16) has a second output (68) for the radius component of the polar coordinate which is sent to a second quantizer (69) and the output of the second quantizer (69) is sent to the visualization unit (75).

5. Apparatus as defined in any one of the claims 1 to 4 wherein a scanning fluorescence microscope has the apparatus implemented.

6. Method for analyzing and visualizing acquired physiological scan data comprises the steps of:

- accumulating scan data for at least two different wavelengths each wavelength is accumulated with a different detector (12 and 14),
- transferring the accumulated data to a processing unit (16) for combining the at least first and second signal ($I_1$, $I_2$) into a vector I and for transforming said vector into a poplar coordinate system;
- quantizing an angle component of the polar coordinates of said vector, transferring the quantizied angle component to a segmenter (72) which has a plurality of input ports for receiving the detector signals and angle component, and inputs for calibration parameters consisting essentially of minimum angle, the maximum angle, maximum and minimum intensities from the detectors (12 and 14), and sending the data to a visualization unit (75),
- assigning color to each angle component of the scan data of said vector for generating colored angle components, and
- displaying the colored angle components on a display (18).

7. Method as recited in claim 6 comprises the step of assigning one color to proper measurement values and an other color to improper measurement values by a visualization unit (75).

8. Method as recited in claim 6 comprises the step of transferring the radius component of the polar coordinate form a second output (68) of the processing unit (16) to a second quantizer (69) and sending the output of the second quantizer (69) to the visualization unit (75).

9. Method as recited in claim 6 comprises a system calibration which has steps of:

- determining a background region (H) in a cytofluorogram on the display wherein the background region (H) represents an averaged measurement value;
- determining a region of interest (F) in a cytofluorogram on the display wherein the region of interest (F) represents an averaged measurement value;
- generating a computer based recommendation for adjusting the detector settings and thereby showing the position change of the background region (H) in the cytofluorogram on the display (18) thereby determining background intensities of the cytofluorogram;
- applying a chemical substance for binding a specific ion;
- generating a computer based recommendation for adjusting the detector settings and thereby showing the position change of the region of interest (F) in the cytofluorogram on the display thereby determining the intensities of the cytofluorogram which reflect the binding of the specific ion;
- applying a chemical substance to free the specific ion;
- generating a computer based recommendation for adjusting the detector settings and thereby showing the position change of the region of interest (F) with the freed ions and thereby determining the intensities of the cytofluorogram, which reflect the freed ions; and
- transferring the collected parameters to the segmenter (72) and the processing unit (16).

10. The method as recited in claim 9 wherein the detector settings are gain and offset.

11. The method as recited in claim 9 wherein the detector settings to initiate the position change of the region of interest (F), wherein the position change is performed by directly modifying the gain on the panel box or by dragging the region of interest (F) on display (18)

12. The method as recited in any one of the claims 6 to 11 **characterized in that** the method is used in a scanning fluorescence microscope having at least two detectors (12 and 14) each of which acquire light which differs in wavelength.

**Patentansprüche**

1. Eine Vorrichtung zur Analyse und Visualisierung für aufgenommene physiologische Scandaten umfasst:

ein Display (18);
ein erstes Subsystem (60), wobei das erste Subsystem (60) mindestens zwei Detektoren (12, 14) umfasst, die jeweils auf unterschiedliche Wellenlängen ansprechen;
ein zweites Subsystem (61), das eine Steuerungs- und Verarbeitungseinrichtung (16) umfasst, die die von

# EP 1 120 675 B1

den mindestens zwei Detektoren (12, 14) akkumulierten Signale empfängt, **dadurch gekennzeichnet, dass** das zweite Subsystem (61), in dem das mindestens erste und zweite Signal ($I_1$, $I_2$) einen Vektor I bilden und diesen Vektor in ein Polarkoordinatensystem transformiert;

einen Quantifizierer (70) für eine Winkelkomponente der Polarkoordinaten, die auf dem Display (18) anzeigbar sind;

einen Segmentierer (72), der eine Vielzahl von Eingabeports besitzt, um die Detektorsignale und die Winkelkomponente zu empfangen, und Eingänge für Kalibrierparameter, die im Wesentlichen aus dem Minimum- und Maximumwinkel und den Maximum- und Minimumintensitäten der Detektoren bestehen; und eine Visualisierungseinheit (75), um den verarbeiteten Werten Farben zu zuweisen.

2. Vorrichtung gemäß Anspruch 1, wobei das zweite Subsystem (61) eine Visualisierungseinheit (75) umfasst, um den richtigen Messwerten eine Farbe und den falschen Messwerten eine andere Farbe zuzuweisen.

3. Vorrichtung gemäß Anspruch 1, wobei eine Speichereinheit vorgesehen ist, um die quantifizierte Winkelkomponente der Polarkoordinaten zu speichern.

4. Vorrichtung gemäß Anspruch 1, wobei die Steuerungs- und Verarbeitungseinrichtung (16) einen ersten Ausgang (67) für die Radialkomponente der Polarkoordinate besitzt, die zu einem Quantifizierer (70) führt, und der Ausgang des Quantifizierers (70) führt zur Visualisierungseinheit (75).

5. Vorrichtung gemäß jedem der Ansprüche 1 bis 4, wobei in einem Scanningfluoreszenzmikroskop die Vorrichtung vorgesehen ist.

6. Ein Verfahren zur Analyse und Visualisierung für aufgenommene physiologische Scandaten umfasst die folgenden Schritte:

- Scandaten für mindestens zwei unterschiedliche Wellenlängen zu akkumulieren, wobei jede Wellenlänge mit einem anderen Detektor (12, 14) akkumuliert wird,
- die akkumulierten Daten zu einer Steuerungs- und Verarbeitungseinrichtung (16) weiterzuleiten, so dass das mindestens erste und zweite Signal ($I_1$, $I_2$) einen Vektor $I$ ergeben und dieser Vektor in ein Polarkoordinatensystem transformiert wird,
- eine Winkelkomponente der Polarkoordinaten dieses Vektors zu quantifizieren, die quantifizierte Winkelkomponente an einen Segmentierer (72 weiterzuleiten, der eine Vielzahl an Eingabeports besitzt, um die Detektorsignale und die Winkelkomponente zu empfangen, und Eingänge für Kalibrierparameter besitzt, die im Wesentlichen aus dem Minimum- und Maximumwinkel und den Maximum- und Minimumintensitäten der Detektoren (12, 14) bestehen, und die Daten an eine Visualisierungseinheit (75) senden,
- jeder Winkelkomponente der Scandaten dieses Vektors Farbe zuzuweisen, um farbige Winkelkomponenten zu erzeugen, und
- die farbigen Winkelkomponenten auf einem Display (18) anzuzeigen.

7. Verfahren gemäß Anspruch 6 umfasst den Schritt des Zuweisens einer Farbe zu den richtigen Messwerten und einer anderen Farbe zu den falschen Messwerten durch eine Visualisierungseinheit (75).

8. Verfahren gemäß Anspruch 6 umfasst den Schritt des Weiterleitens der Radialkomponente der Polarkoordinaten von einem zweiten Ausgang (68) der Steuerungs- und Verarbeitungseinrichtung (16) zu einem zweiten Quantifizierer (69) und die Ausgabe des zweiten Quantifizierers (69) an die Visualisierungseinheit (75).

9. Verfahren gemäß Anspruch 6 umfasst ein Kalibriersystem mit den folgenden Schritten:

- einen Hintergrund (H) in einem Zytofluorgramm auf der Anzeige zu ermitteln, wobei der Hintergrund (H) einen gemittelten Messwert darstellt;
- einen zu untersuchenden Bereich (F) in einem Zytofluorgramm auf der Anzeige zu ermitteln, wobei der zu untersuchende Bereich (F) einen gemittelten Messwert darstellt;
- eine computerbasierte Empfehlung zu erstellen, um die Detektoreinstellungen anzupassen und dabei die Positionsänderung des Hintergrunds (H) in dem Zytofluorgramm auf dem Display (18) anzuzeigen und so Hintergrundintensitäten des Zytofluorgramms zu ermitteln;
- eine chemische Substanz anzuwenden, um ein bestimmtes Ion zu binden;
- eine computerbasierte Empfehlung zu erstellen, um die Detektoreinstellungen anzupassen und dabei die Po-

13

sitionsänderung des zu untersuchenden Bereichs (F) in dem Zytofluorgramm auf dem Display (18) anzuzeigen und so die Intensitäten des Zytofluorgramms zu ermitteln, die die Bindung des bestimmten Ions wiedergeben;

- eine chemische Substanz zu verwenden, um das bestimmte Ion frei zu setzen;
- eine computerbasierte Empfehlung zu erstellen, um die Detektoreinstellungen anzupassen und dabei die Positionsänderung des zu untersuchenden Bereichs (F) mit den frei gesetzten Ionen anzuzeigen und so die Intensitäten des Zytofluorgramms zu ermitteln, die die frei gesetzten Ionen wiedergeben; und
- die gesammelten Parameter an den Segmentierer (72) und an die Steuerungsund Verarbeitungseinrichtung (16) weiterzuleiten.

**10.** Das Verfahren gemäß Anspruch 9, wobei die Detektoreinstellungen Verstärkung und Offset sind.

**11.** Das Verfahren gemäß Anspruch 9, wobei die Detektoreinstellungen, um die Positionsänderung des zu untersuchenden Bereichs (F) zu initiieren, durch direkte Modifikation der Verstärkung auf der Panelbox oder durch Ziehen des zu untersuchenden Bereichs (F) auf dem Display (18) vorgenommen werden.

**12.** Das Verfahren gemäß jedem der Ansprüche 6 bis 11, wobei das Verfahren in einem Scanningfluoreszenzmikroskop verwendet wird, das mindestens zwei Detektoren (12, 14) besitzt und jeder dieser Detektoren Licht mit einer unterschiedlichen Wellenlänge aufnimmt.

## Revendications

**1.** Appareil pour analyser et visualiser des données de balayage physiologiques acquises, comprenant :

un affichage (18) ;
un premier sous-système (60) dans lequel le premier sous-système (60) comprend au moins deux détecteurs (12, 14) réagissant chacun à une longueur d'onde différente ;
un second sous-système (61) comprenant une unité de traitement (16) recevant les signaux accumulés par les au moins deux détecteurs (12 et 14),

**caractérisé en ce que**
le second sous-système (61) combinant le au moins premier et second signal ($I_1$, $I_2$) en un vecteur I, et transformant ledit vecteur en un système de coordonnée polaire ;
une unité pour quantifier (70) une composante angulaire de l'affichage disponible de coordonnées polaires (18) ;
une unité de segmentation (72) qui a une pluralité de ports d'entrée pour recevoir les signaux de détecteur et la composante angulaire, et qui entre pour calibrage des paramètres se composant essentiellement d'un angle minimum, de l'angle maximum, des intensités maximum et minimum en provenance des détecteurs ; et
une unité de visualisation (75) pour attribuer de la couleur aux valeurs traitées.

**2.** Appareil selon la revendication 1 dans lequel le second sous-système (61) comprend et une unité de visualisation (75) pour attribuer une couleur aux valeurs de mesure correctes et une autre couleur aux valeurs de mesure incorrectes.

**3.** Appareil selon la revendication 1 dans lequel une unité de mémorisation (71) est fournie pour mémoriser la composante angulaire quantifiée des coordonnées polaires.

**4.** Appareil selon la revendication 1 dans lequel l'unité de traitement (16) a une seconde sortie (68) pour la composante radiale de la coordonnée polaire qui est envoyée à un second quantificateur (69) et la sortie du second quantificateur (69) est envoyée à l'unité de visualisation (75).

**5.** Appareil selon l'une quelconque des revendications 1 à 4 dans lequel un microscope à fluorescence à balayage a l'appareil mis en oeuvre.

**6.** Procédé pour analyser et visualiser des données de balayage physiologiques acquises, comprenant les étapes consistant à :

- accumuler des données de balayage pour au moins deux longueurs d'onde différentes, chaque longueur d'onde étant accumulée avec un détecteur différent (12 et 14),

- transférer les données accumulées à une unité de traitement (16) pour combiner le au moins premier et second signal (I$_1$, I$_2$) en un vecteur I et pour transformer ledit vecteur en un système de coordonnée polaire,
- quantifier une composante angulaire des coordonnées polaires dudit vecteur, transférant la composante angulaire quantifiée à une unité de segmentation (72) qui a une pluralité de ports d'entrée pour recevoir les signaux de détecteur et la composante angulaire, et qui entre pour calibrage des paramètres se composant essentiellement d'un angle minimum, de l'angle maximum, des intensités maximum et minimum en provenance des détecteurs (12 et 14) et envoyant les données à une unité de visualisation (75),
- attribuer de la couleur à chaque composante angulaire des données de balayage dudit vecteur pour générer des composantes angulaires colorées, et
- afficher les composantes angulaires colorées sur un affichage (18).

7. Procédé selon la revendication 6 comprend l'étape consistant à attribuer une couleur aux valeurs de mesure correctes et une autre couleur aux valeurs de mesure incorrectes par l'intermédiaire d'une unité de visualisation (75).

8. Procédé selon la revendication 6 comprend l'étape consistant à transférer la composante radiale de la coordonnée polaire d'une seconde sortie (68) de l'unité de traitement (16) à un second quantificateur (69) et à envoyer la sortie du second quantificateur (69) à l'unité de visualisation (75).

9. Procédé selon la revendication 6 comprenant un calibrage de système qui comporte les étapes consistant à :

- déterminer une région d'arrière plan (H) dans un cytofluorogramme sur l'affichage dans lequel la région d'arrière plan (H) représente une valeur de mesure moyennée ;
- déterminer une région d'intérêt (F) dans un cytofluorogramme sur l'affichage dans lequel la région d'intérêt (F) représente une valeur de mesure moyennée ;
- générer une recommandation basée sur un ordinateur pour ajuster les réglages de détecteur et par conséquent représenter le changement de position de la région d'arrière plan (H) dans le cytofluorogramme sur l'affichage (18) déterminant ainsi des intensités d'arrière plan du cytofluorogramme ;
- appliquer une substance chimique pour lier un ion spécifique ;
- générer une recommandation basée sur un ordinateur pour ajuster les réglages de détecteur et par conséquent représenter le changement de position de la région d'intérêt (F) dans le cytofluorogramme sur l'affichage déterminant ainsi les intensités du cytofluorogramme qui reflètent la liaison de l'ion spécifique ;
- appliquer une substance chimique pour libérer l'ion spécifique ;
- générer une recommandation basée sur un ordinateur pour ajuster les réglages de détecteur et par conséquent représenter le changement de position de la région d'intérêt (F) avec les ions libérés et déterminer ainsi les intensités du cytofluorogramme, qui reflètent les ions libérés ; et
- transférer les paramètres collectés à une unité de segmentation (72) et à l'unité de traitement (16).

10. Procédé selon la revendication 9 dans lequel les réglages de détecteur sont le gain et le décalage.

11. Procédé selon la revendication 9 dans lequel les réglages de détecteur pour engager le changement de position de la région d'intérêt (F), dans lequel le changement de position est effectué en modifiant directement le gain sur la boîte de panneau ou en faisant glisser la région d'intérêt (F) sur l'affichage (18).

12. Procédé selon l'une quelconque des revendications 6 à 11 **caractérisé en ce que** le procédé est utilisé dans un microscope à fluorescence à balayage comportant au moins deux détecteurs (12 et 14) dont chacun acquiert de la lumière qui diffère en longueur d'onde.

**Fig. 1:**

**Fig. 2**

**Fig. 3**

**Fig. 4**

**Fig. 5**

Fig. 6

$I_1$

$I_2$

**Fig. 7**

**Fig. 8**

Fig. 9a

Fig. 9b

Fig. 9c

Fig. 9d

Fig. 9e

Fig. 9f

Fig. 9g

Fig. 9h